# EUROPÄISCHE PATENTSCHRIFT

(11) **EP 1 084 380 B1**
(45) Veröffentlichungstag und Bekanntmachung des Hinweises auf die Patenterteilung: **06.01.2010**
(21) Anmeldenummer: 99929026.5
(22) Anmeldetag: 24.04.1999
(51) Int. Cl.: G01C 1/00

(54) **VERFAHREN ZUR DARSTELLUNG VON GELÄNDE**
METHOD FOR REPRESENTATION OF THE TERRAIN
PROCEDE DE REPRODUCTION TOPOGRAPHIQUE

(30) Priorität: 05.05.1998 DE 19819844
(43) Veröffentlichungstag der Anmeldung: 21.03.2001
(73) Patentinhaber: Diehl Aerospace GmbH, 88662 Überlingen (DE)
(72) Erfinder: KAUFHOLD, Rainer, D-64297 Darmstadt (DE)
(74) Vertreter: Katscher Habermann Patentanwälte
(86) Internationale Anmeldenummer: PCT/DE1999/001238
(87) Internationale Veröffentlichungsnummer: WO 1999/057511

(56) Entgegenhaltungen:
- EP-A- 0 381 178
- EP-A- 0 418 558
- WO-A-97/05450
- US-A- 5 552 787
- NAGY G: "Terrain visibility" COMPUTERS AND GRAPHICS, Bd. 18, Nr. 6, 1. November 1994 (1994-11-01), Seite 763-773 XP004014014 ISSN: 0097-8493

## Beschreibung

Die Erfindung betrifft ein Verfahren zur Darstellung von Gelände auf einer Anzeigevorrichtung eines Flugzeugs wobei das Gelände mindestens teilweise in Form eines Schichtenmodells des Geländes dargestellt wird, wobei die jeweils sichtbaren Oberflächen der Schichten auf vorgegebenen Höhen liegend dargestellt sind, wobei die Höhe des Geländes jeweils durch die darüber liegende vorgegebene Höhenstufe ersetzt wird, und wobei die Darstellung aus einer Blickrichtung erfolgt, die im wesentlichen der Flugrichtung entspricht.

In zunehmendem Maße werden Darstellungen des jeweils vorausliegenden oder des jeweils überflogenen Geländes zu Zwecken der Flugführung angewendet. Dazu wird eine Datenbank mitgeführt, welche ein Modell des Geländes enthält. Zur Darstellung auf einem Bildschirm, beispielsweise Flüssigkristalldisplay, Plasmadisplay oder Bildschirm einer Kathodenstrahlröhre, - im folgenden auch Display genannt - werden die Daten aus der Geländedatenbank in geeigneter Weise aufbereitet, so dass beispielsweise eine perspektivische Ansicht in Flugrichtung oder ein Ausschnitt aus einer Landkarte sichtbar gemacht wird.

Die Geländedarstellung in Flugrichtung erfolgt üblicherweise in einem sogenannten PFD (= Primary-Flight-Display) zusammen mit weiteren Anzeigen, insbesondere Zeigern, Skalen und alphanumerischen Darstellungen.

Ein solches Primary-Flight-Display, das außer diesen Informationen noch einen Prädiktor und gegebenenfalls Sollflugpfade zeigt, ist in EP 0 418 558 B2 beschrieben.

Die bisherigen Bemühungen auf diesem Gebiet führten zu einer möglichst realistischen Darstellung des Geländes. Dabei wird zur Darstellung beliebig geformter Flächen häufig ein sogenanntes Rastermodell verwendet, bei dem zwischen gegebenenfalls in unregelmäßigen Abständen angeordneten Stützpunkten Flächen aufgespannt werden, welche die entsprechenden Teile der gesamten Fläche angenähert wiedergeben.

Im Zuge von der Erfindung vorangegangenen Untersuchungen hat sich herausgestellt, dass eine realistische Darstellung des Geländes von den weiteren Anzeigen ablenken und gegebenenfalls auch Anlass zu Fehlinterpretationen geben kann.

In WO 97/05450 A wird ein Verfahren zur Darstellung von Gelände auf einer Anzeigenvorrichtung eines Flugzeugs beschrieben, bei dem in Abhängigkeit von der jeweiligen Höhe des Geländes vorgegebene Punktraster verwendet werden, die sich sowohl in der verwendeten Farbe als auch hinsichtlich der Punktdichte unterscheiden können. Eine perspektivische Darstellung und eine Beschränkung auf möglichst wenige, dafür jedoch relevante Informationen sind bei diesem Verfahren nicht beschrieben und auch kaum denkbar.

Aufgabe der vorliegenden Erfindung ist es daher, die Darstellung des Geländes derart vorzunehmen, dass sie einerseits die Erkennbarkeit der weiteren Anzeigen nicht vermindert und andererseits trotzdem für den Piloten wichtige Informationen in unmissverständlicher Weise ermöglicht.

Diese Aufgabe wird mit dem erfindungsgemäßen Verfahren dadurch gelöst, dass die Darstellung perspektivisch ist und dass Teile des Geländes, die unterhalb einer vorgegebenen Höhe liegen, schematisiert dargestellt werden und diejenigen Teile des Geländes, die oberhalb der vorgegebenen Höhe liegen, als genauere Approximation dargestellt sind.

Das Schichtenmodell stellt eine relativ grobe Approximation des Geländes dar. Durch das erfindungsgemäße Verfahren wird die Menge der dargebotenen einzelnen Informationen wesentlich herabgesetzt. Bei dem erfindungsgemäßen Verfahren ist vorgesehen, dass die jeweils sichtbaren Oberflächen der Schichten auf vorgegebenen Höhen liegend dargestellt sind, wobei die Höhe des Geländes jeweils durch die darüber liegende vorgegebene Höhe ersetzt wird. Dadurch ist ein einfaches Abschätzen der Höhe von Erhebungen möglich, wobei die dargestellte Höhe der Erhebungen aus Sicherheitsgründen gegenüber dem realistischen Gelände meistens höher, mindestens jedoch gleich hoch erscheint.

Erfindungsgemäß ist die Darstellung perspektivisch und erfolgt vorzugsweise aus einer Blickrichtung, die im Wesentlichen der Flugrichtung entspricht.

Bei dieser vorteilhaften Ausgestaltung eines Primary-Flight-Displays werden Teile des Geländes, die unterhalb einer für den Piloten interessanten Höhe liegen, schematisiert dargestellt, während diejenigen Teile, die in einem den Piloten interessierenden Höhenbereich liegen, als genauere Approximation und relativ realistisch dargestellt sind.

Vorzugsweise ist bei dieser Ausgestaltung vorgesehen, dass die vorgegebene Höhe um eine vorgegebene Höhendifferenz unterhalb des Flugzeugs liegt.

Um sich auch während des Landeanflugs an Einzelheiten des Geländes orientieren zu können, kann diese Ausführungsform derart weitergebildet sein, dass in einem vorgegebenen Bereich um eine Start- und Landebahn das Gelände entsprechend den natürlichen Höhen dargestellt wird. Dabei kann ein abrupter Übergang zur Darstellung des Schichtenmodells dadurch vermieden werden, dass in einem weiteren Bereich um eine Start- und Landebahn dünnere Schichten dargestellt werden.

Eine weitere Ausführungsform des erfindungsgemäßen Verfahrens trägt zur sicheren Informationsaufnahme dadurch bei, dass die Darstellung zumindest der unteren Teile des Geländes in einer weniger auffälligen Farbe, insbesondere Grau, erfolgt. Dabei ist vorzugsweise vorgesehen, dass die unteren Schichten in der weniger auffälligen Farbe dargestellt werden. Bei dieser Weiterbildung treten die den Piloten interessierenden Geländeteile besonders deutlich in Erscheinung, wenn oberhalb einer bestimmten Höhe liegende Geländeteile mit mindestens einer auffälligen Farbe dargestellt sind. Dabei kann die bestimmte Höhe um eine vorgegebene Höhendifferenz unterhalb der jeweiligen Flughöhe des Flugzeugs liegen. Desweiteren kann dabei vorgesehen sein, dass die Geländeteile oberhalb der Flughöhe in einer besonders auffälligen Farbe (Warnfarbe) dargestellt sind.

Um auch bei den an sich farblich unauffällig gestalteten tieferen Geländelagen eine Schätzung der Höhen zu erleichtern, kann bei dieser Ausgestaltung vorgesehen sein, dass die seitlichen Begrenzungen (Wände) der Schichten farblich von den Oberflächen der Schichten abgehoben sind und/oder dass den einzelnen Schichten verschiedene Farben bzw. Graustufen zugeordnet werden.

Damit sehr weit entfernte Teile des Geländes, die zwar für einen Gesamteindruck nicht unwichtig sein mögen, die unmittelbare Aufmerksamkeit des Piloten nicht auf sich lenken, ist bei einer anderen Weiterbildung vorgesehen, dass Teile des Geländes, welche vom Flugzeug weiter entfernt sind, mit weniger auffälligen Farben, insbesondere Grau, dargestellt werden.

Je höher ein Flugzeug fliegt, desto weiter ist der bei gegebenem Blickwinkel nächste sichtbare Punkt des Geländes dem Flugzeug voraus. Wird jedoch aus Gründen der Rechenkapazität lediglich der Raum innerhalb einer vorgegebenen Pyramide auf dem Bildschirm dargestellt, so entsteht bei großen Flughöhen ein recht unnatürlicher Eindruck. Dieses kann bei einer Ausgestaltung der Erfindung, bei der die perspektivische Darstellung aus einer Blickrichtung erfolgt, die im wesentlichen der Flugrichtung entspricht, dadurch verhindert werden, dass diejenigen Teile des Geländes dargestellt werden, die innerhalb einer Sichtpyramide liegen, deren entfernte Begrenzungsebene in Abhängigkeit von der jeweiligen Flughöhe derart gesteuert wird, dass sie um eine vorgegebene Entfernung weiter vom Flugzeug entfernt ist als der Schnittpunkt der Sichtpyramide mit dem Boden.

Eine unauffälligere Darstellung der tiefen Teile des Geländes unter Beibehaltung einer genaueren Modellierung kann bei einer anderen Ausführungsform dadurch erreicht werden, dass das Gelände in Form eines Rastermodells des Geländes dargestellt wird, wobei Stützpunkte jeweils auf Höhenlinien liegen, und dass die Flächen zwischen jeweils zwei angrenzenden Höhenlinien mit einer Farbe versehen sind, die sich von der Farbe der Flächen zwischen anderen Höhenlinien unterscheidet.

Ein Navigationsdisplay wird gemäß der Aufgabenstellung dadurch verbessert, dass die Darstellung zumindest der unteren Teile des Geländes in einer weniger auffälligen Farbe, insbesondere Grau, erfolgt. Dabei ist vorzugsweise vorgesehen, dass die Darstellung in Form von Höhenlinien erfolgt, wobei die Fläche zwischen jeweils zwei benachbarten Höhenlinien (Höhenstufe) mit einer Farbe, insbesondere Grau, ausgefüllt wird, die von Höhenstufe zu Höhenstufe verschieden ist. Zur Erzielung einer plastischeren Darstellung kann dabei vorgesehen sein, dass der Darstellung der Höhenlinien ein Modell des Geländes überlagert wird, für das die Wirkung einer Beleuchtung berechnet wird.

Um eine Fehlinterpretation der mit den Höhenlinien angedeuteten Höhen und Tiefen zu vermeiden, kann bei dieser Ausführungsform vorgesehen sein, daß die Beleuchtung bezogen auf den Bildschirm von oben einfällt.

Diese Ausführungsform der Erfindung kann dadurch weitergebildet werden, daß Teile des Geländes, die für die Flugführung relevant sind, mit einer auffälligen Farbe dargestellt werden. Diese Farbe kann je nach Bedarf nuanciert werden, beispielsweise in Abhängigkeit von unterschiedlichen Gefährdungsstufen.

Schließlich kann bei dem erfindungsgemäßen Verfahren vorgesehen sein, daß zur besseren Erkennbarkeit von Luftfahrthindernissen diese quaderförmig dargestellt werden.

Ausführungsbeispiele der Erfindung sind in der Zeichnung anhand mehrerer Figuren dargestellt und in der nachfolgenden Beschreibung näher erläutert. Es zeigt:
- Fig. 1: eine vereinfachte Bildschirmdarstellung, welche dem Piloten die wichtigsten Informationen zur Flugführung übermittelt,
- Fig. 2: ein Blockschaltbild einer Einrichtung zur Durchführung des erfindungsgemäßen Verfahrens,
- Fig. 3: ein Höhenprofil als Schichtenmodell,
- Fig. 4: ein weiteres Höhenprofil,
- Fig. 5: einen Vergleich einer Darstellung des Geländes als Rastermodell und als Schichtenmodell,
- Fig. 6: einen weiteren Vergleich aus einem anderen Blickwinkel,
- Fig. 7: eine Profildarstellung zur Erläuterung des Übergangs vom Schichten- zum Rastermodell,
- Fig. 8: eine seitliche Ansicht zur Erläuterung des jeweils dargestellten Raumes,
- Fig. 9: einen Bildschirm mit einer Kartendarstellung,
- Fig. 10: die Darstellung eines Luftfahrthindernisses und
- Fig. 11: eine Darstellung einer Geländeform mit Hilfe eines Graphikcomputers.

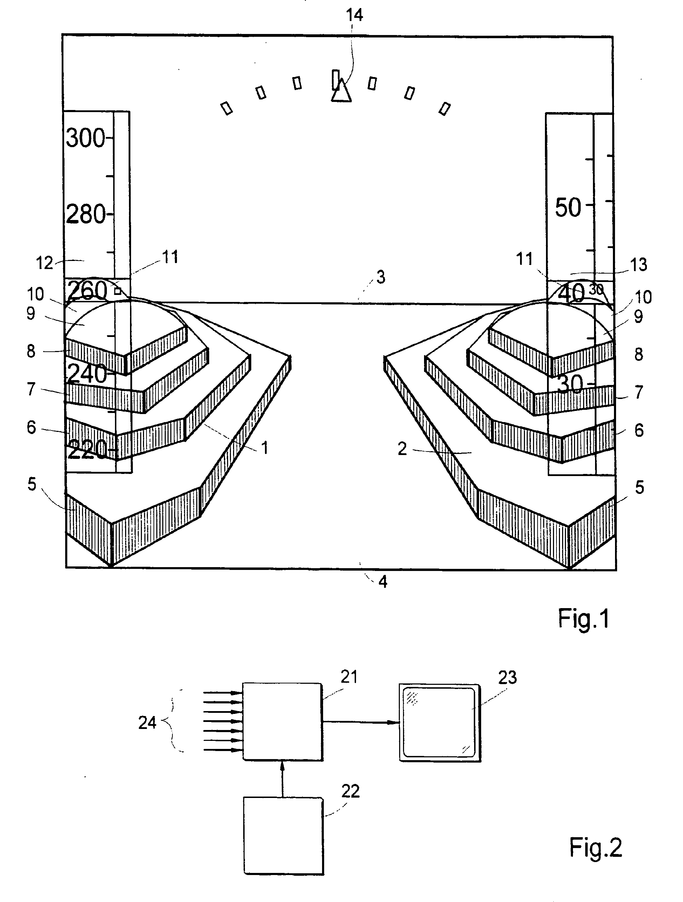

Fig. 1 zeigt als stark vereinfachtes Ausführungsbeispiel eines Primary-Flight-Displays einen Bildschirm mit Blick auf ein Gelände mit zwei Bergen 1, 2 und einem Horizont 3. Zwischen den Bergen 1, 2 befindet sich eine Ebene 4. Die Berge sind jeweils in Form von Schichten 5, 6, 7, 8 modelliert. Geländeteile, die höher als die Schicht 8 sind, werden in Annäherung an ihre tatsächliche Form mit Hilfe eines an sich bekannten Rastermodells dargestellt, so daß die Bergkuppen 9, 10, 11 etwa realistisch erscheinen. Außerdem enthält das Primary-Flight-Display weitere Anzeigen, von denen lediglich eine Geschwindigkeitsanzeige 12, eine Höhenanzeige 13 und eine Rollwinkelanzeige 14 in der Figur dargestellt sind. Meistens werden im Primary-Flight-Display auf dem Gelände noch Gitterlinien dargestellt, die der Übersichtlichkeit halber in Fig. 1 jedoch fortgelassen sind.

Fig. 2 zeigt Teile einer Einrichtung zur Durchführung des erfindungsgemäßen Verfahrens. Diese besteht im wesentlichen aus einem Computer 21, einer Datenbank 22 für das Gelände und einer Anzeigevorrichtung 23. Letztere kann beispielsweise von einer Flüssigkristallanzeige oder von einer Kathodenstrahlröhre gebildet sein. Dem Computer sind über Eingänge 24 verschiedene Informationen zuführbar, beispielsweise die Flughöhe, die Flugrichtung, der Nickwinkel, der Rollwinkel und eine Vielzahl von Daten, die mit Hilfe von in die Abbildungen nach Fig. 1 eingefügten Zeigern und Skalen sichtbar gemacht werden.

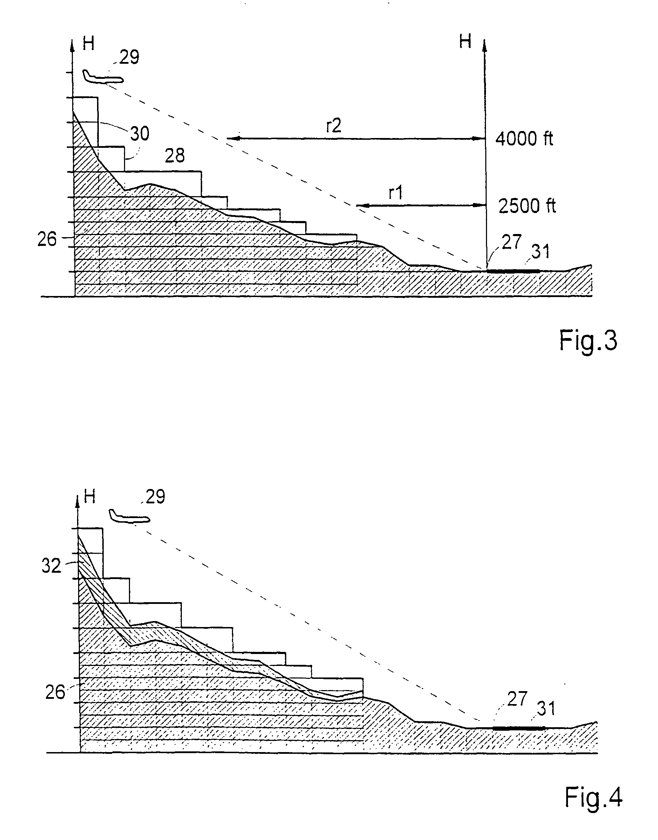

Fig. 3 zeigt einen Längsschnitt durch ein Gelände mit überhöhter Höhendarstellung. In einem Umkreis mit dem Radius r1 eines Flughafenreferenzpunktes 27 (ARP = Airport reference point) ist das Gelände als Rastermodell, das heißt in weitgehend realistischer Form dargestellt. Außerhalb dieses Kreises ist das Gelände als Schichtenmodell dargestellt, wobei jeweils die Oberfläche einer Schicht höher als die darunterliegende Geländeoberfläche ist und sich auf einer ausgewählten Höhenstufe befindet. Die dadurch entstehende Geländeoberfläche 28 ist für den Streckenflug relativ grob abgestuft, beispielsweise mit Stufenhöhen von 1000 Fuß.

Diese Abstufung geht beim Eintritt in den Ladeanflug des Flugzeugs 29 zur Landebahn 32, der in der Regel in einer Höhe von 4000 Fuß über Grund erfolgt und bei einem Gleitwinkel zwischen 2,7° und 3,3° in einem Abstand von etwa r2 = 25 km vom Flughafenreferenzpunkt 27 beginnt, in feinere Stufungen von jeweils 500 Fuß über. Da mit abnehmender Flughöhe H die exakte Radarhöheninformation zunehmend an Bedeutung gewinnt, werden, wie bereits erwähnt, in einem Abstand von etwa r1 = 15 km zum Flughafenreferenzpunkt 27 die Geländehöhen realistisch abgebildet.

Der Übergang zwischen den Höhenstufen erfolgt jeweils durch vertikale Flächen (Wände) 30, wodurch eine Hervorhebung der Gradienten, die das Gefährdungspotential widerspiegeln, erzielt wird. Desweiteren erhält man durch die Wände eine vertikale Bezugsgröße, wodurch das Abschätzen von Höhen und Höhenänderungen wesentlich vereinfacht wird. Zur Hervorhebung der Wände können diese in einer anderen Farbe bzw. in einem dunkleren Grauton wiedergegeben werden. Dadurch entsteht ein relativ natürlicher Eindruck, da auch bei einer Beleuchtung von oben die Wände dunkler erscheinen.

Obwohl mit dem Schichtenmodell eine Einhüllende der vorliegenden Geländestruktur beschrieben wird, impliziert die Darstellung keine definierte Geländefreiheit, da der Abstand zwischen der Höhe der Geländepunkte und des Höhenbandes in aller Regel variiert und auch gleich 0 sein kann. Fig. 4 zeigt schematisch, wie eine Geländesicherheit in einfacher Weise in das Schichtenmodell aufgenommen werden kann, indem beispielsweise vor der Vornahme der Höhenstufung der jeweiligen Höhe 10 % (32) ihres jeweiligen Höhenwertes hinzuaddiert werden.

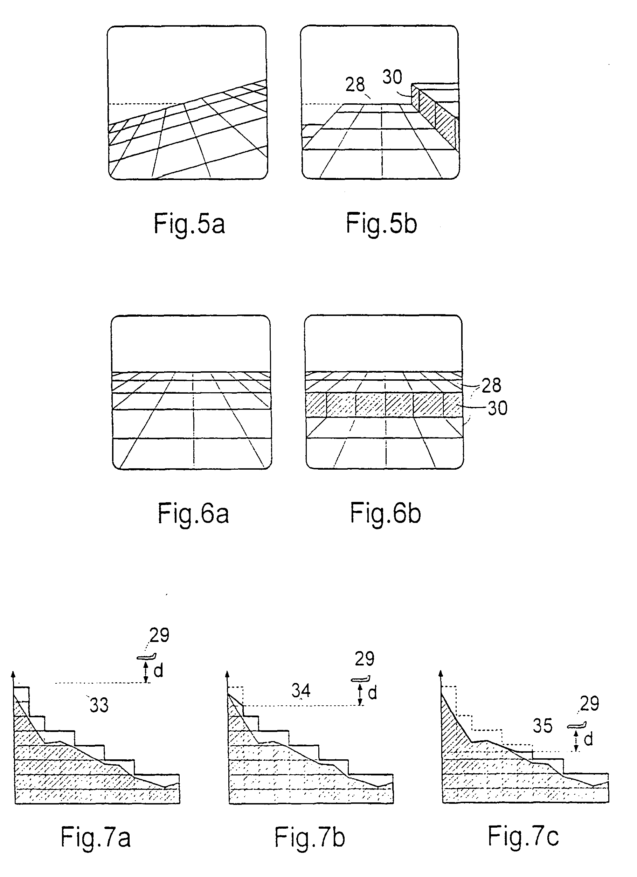

Die Darstellung des Geländes als Schichtenmodell ermöglicht ferner tatsächlich ansteigendes oder abfallendes Gelände von einem durch entsprechend der Fluglage scheinbar ansteigenden bzw. abfallenden Gelände zu unterscheiden. So zeigt beispielsweise Fig. 5 die gleiche Situation, bei welchem ein Flugzeug horizontal über einer nach rechts ansteigenden Ebene fliegt. Dabei zeigt Fig. 5a diese Situation bei der Darstellung des Geländes als Rastermodell, während der Darstellung nach Fig. 5b ein Schichtenmodell zugrundeliegt. Die gestrichelte Linie verläuft horizontal. Im Fall von Fig. 5a kann der Pilot - abgesehen von der relativ unscheinbaren gestrichelten Linie - nicht unterscheiden, ob die Schräglage des Geländes tatsächlich auf einem schrägen Gelände oder auf einer Schräglage des Flugzeugs beruht. Diese Schwierigkeit besteht bei der Darstellung mit Hilfe des Schichtenmodells gemäß Fig. 5b nicht.

Eine weitere Situation, bei welcher das Schichtenmodell informativer ist, zeigt Fig. 6. Hier wird ein nach vorn gleichmäßig ansteigendes Gelände als Rastermodell (Fig. 6a) und als Schichtenmodell (Fig. 6b) dargestellt. Im Falle von Fig. 6a kann der Pilot nicht ohne Zuhilfenahme weiterer Anzeigen erkennen, ob er über ein nach vorn ansteigendes Gelände fliegt oder ob ein negativer Nickwinkel vorliegt.

Wie bereits im Zusammenhang mit Fig. 1 erwähnt, kann bei dem erfindungsgemäßen Verfahren vorgesehen sein, daß Geländeteile über einer bestimmten Höhe als Rastermodell dargestellt werden. Gemäß Fig. 7 kann diese bestimmte Höhe in Abhängigkeit von der Flughöhe des Flugzeugs gesteuert werden. Fliegt beispielsweise gemäß Fig. 7a ein Flugzeug in einer derartigen Höhe, daß die höchsten Geländeteile (Bergspitzen) niedriger als ein Abstand d unterhalb des Flugzeugs (Linie 33) sind, wird für das ganze Gelände das Schichtenmodell gewählt. Im Falle von Fig. 7b fliegt das Flugzeug tiefer, so daß die oberhalb der gestrichelten Linie 34 liegenden Geländeteile als Rastermodell dargestellt sind. Fig. 7c zeigt den Fall, daß das Flugzeug 29 noch tiefer fliegt, so daß bereits oberhalb einer Linie 35 eine Rastermodelldarstellung erfolgt.

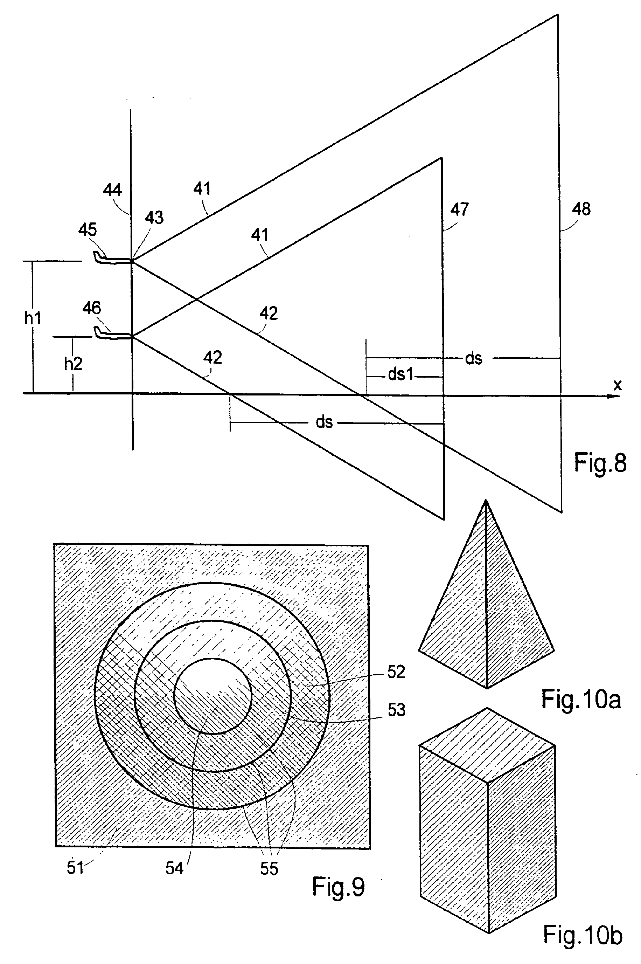

Fig. 8 zeigt den im Display sichtbaren Bereich des vor dem Flugzeug liegenden Raumes für zwei Flugzeuge 45, 46 mit den Höhen h1 und h2. Dieser sichtbare Bereich - im folgenden auch Sichtpyramide genannt - ist nicht nur jeweils durch Randstrahlen 41, 42 begrenzt, sondern auch bezüglich der Entfernung dt vom Betrachtungspunkt 43 bzw. der durch diesen Betrachtungspunkt senkrecht zur Vorwärtsrichtung x verlaufenden Ebene 44. Diese Begrenzung 47 ist durch die endliche Rechenleistung des Computers gegeben. Ansonsten müßten für eine beliebig große Fläche des Geländes Berechnungen für die darzustellenden graphischen Elemente durchgeführt werden, die dann ohnehin im einzelnen so klein wären, daß sie auf dem Display nicht mehr erkennbar sind. Bei einem in der Höhe h2 relativ niedrig fliegenden Flugzeug 46 befindet sich ein relativ großer Teil ds der somit darstellbaren Tiefe des Geländes innerhalb der Sichtpyramide. Damit sieht der Pilot eine im Verhältnis zur Höhe relativ große Strecke vor sich.

Bei einem mit der Höhe h1 höher fliegenden Flugzeug 45 wird ohne weitere Maßnahmen die in die Sichtpyramide fallende Strecke ds1 relativ kurz, was im Display einen unnatürlichen Eindruck hervorruft. Deshalb wird bei dem dargestellten Ausführungsbeispiel die entfernte Begrenzungsebene 48 in Abhängigkeit von der Flughöhe h in Richtung x verschoben.

Fig. 9 zeigt einen Ausschnitt aus einer Landkarte als Navigationsdisplay, wobei vereinfacht ein kegelförmiger Berg dargestellt ist, der sich aus einer Ebene erhebt. Dabei sind die Höhenstufen von links unten nach rechts oben schraffiert, wobei jeweils eine dichtere Schraffur einen dunkleren Grauton darstellt. Im einzelnen sind dies die Höhenstufe 51, in welcher sich die Ebene befindet, und Höhenstufen 52, 53, 54 des Berges. Die höchste Höhenstufe 54 ist nicht schraffiert. Ohne die bereits erwähnte Beleuchtung wäre die Darstellung wenig informativ, insbesondere würde ein Höhenempfinden fehlen. Außerdem würde nur durch bewußte Verarbeitung des Gesehenen zwischen Bergen und Tälern unterschieden werden können.

Das in Fig. 9 dargestellte Navigationsdisplay enthält deshalb nicht nur Höhenlinien 55 und verschieden getönte Höhenstufen 51 bis 54, sondern auch ein relativ gut angenähertes Modell des Geländes, das bezogen auf den Bildschirm von oben beleuchtet ist. Bei der Berechnung der Wirkung einer solchen Beleuchtung wird davon ausgegangen, daß Flächen, auf welche die Beleuchtung senkrecht auftritt, am meisten aufgehellt werden, während dazu schräg stehende Flächen weniger und von der Lichtquelle abgewandte Flächen nicht (zusätzlich) beleuchtet werden.

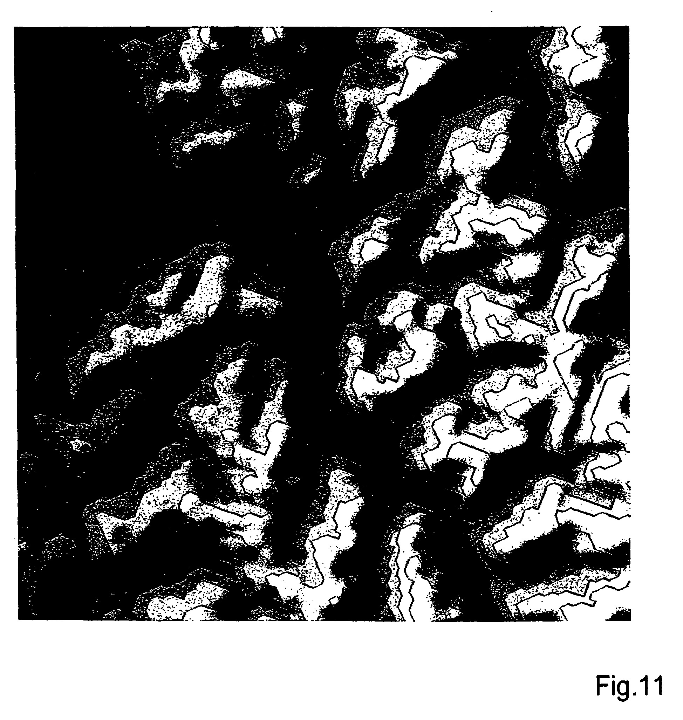

In der Computergraphik ist es zwar ferner bekannt, Schatten zu berechnen. Dieses erfordert jedoch relativ viel Rechenaufwand, so daß bei dem in Fig. 9 dargestellten Ausführungsbeispiel davon abgesehen wurde. Die Wirkung der Beleuchtung ist in Fig. 3 durch eine Schraffur von links oben nach rechts unten dargestellt, wobei an der oberen Seite des kegelförmigen Berges, die in der Regel in die Flugrichtung weist, eine Aufhellung ersichtlich ist, während am Rand die Beleuchtungswirkung gering und auf der unteren Seite des Kegels nicht mehr vorhanden ist. Bereits diese stark vereinfachte Darstellung von Grautönen mit Hilfe von Schraffuren zeigt, daß die Geländedarstellung an Plastizität gewinnt. Bei mit Hilfe eines Graphikcomputers dargestellten Geländeformen konnten noch wesentlich bessere Ergebnisse erzielt werden (siehe Fig. 11).

Da das menschliche Aufnahmevermögen an einen Lichteinfall von oben gewöhnt ist, geht der Betrachter beim Anblick des vor ihm angeordneten Navigationsdisplays davon aus, daß die Schatten unterhalb von Erhebungen auftreten und sieht die Berge 51, 52 deutlich als Berge und nicht als Täler.

Fig. 10 zeigt den Vergleich einer an sich bekannten Darstellung eines Luftfahrthindernisses als Pyramide (Fig. 10a) mit der Darstellung eines Luftfahrthindernisses als Quader (Fig. 10b). Luftfahrthindernisse werden häufig als Pyramide dargestellt, deren Ort dem Ort des Luftfahrthindernisses und deren Höhe im wesentlichen dessen Höhe entspricht. Es wurde jedoch festgestellt, daß gerade die Spitze einer Pyramide nicht besonders gut erkennbar ist. Deshalb wird im Rahmen der Erfindung vorgeschlagen, einen Quader, wie er schematisch in Fig. 10b dargestellt ist, als Symbol für ein Luftfahrthindernis zu verwenden. Neben der besseren Erkennbarkeit des Quaders kann auch gleich abgeschätzt werden, ob sich das Flugzeug oberhalb oder unterhalb der Höhe des Luftfahrthindernisses befindet, wenn nämlich die obere Fläche des Quaders sichtbar oder nicht sichtbar ist.

## Patentansprüche

1. Verfahren zur Darstellung von Gelände auf einer Anzeigevorrichtung eines Flugzeugs, wobei das Gelände mindestens teilweise in Form eines Schichtenmodells des Geländes dargestellt wird, wobei die jeweils sichtbaren Oberflächen der Schichten auf vorbestimmten Höhen liegend dargestellt sind, wobei die Höhe des Geländes jeweils durch die darüberliegende vorbestimmte Höhenstufe ersetzt wird, und wobei die Darstellung aus einer Blickrichtung erfolgt, die im wesentlichen der Flugrichtung entspricht, **dadurch gekennzeichnet, dass** die Darstellung perspektivisch ist und dass Teile des Geländes, die unterhalb einer vorgegebenen Höhe liegen, schematisiert dargestellt werden und diejenigen Teile des Geländes, die oberhalb der vorgegebenen Höhe liegen, als genauere Approximation dargestellt sind.

2. Verfahren nach Anspruch 1, **dadurch gekennzeichnet, dass** die vorgegebene Höhe um eine vorgegebene Höhendifferenz unterhalb des Flugzeugs liegt.

3. Verfahren nach einem der Ansprüche 1 oder 2, **dadurch gekennzeichnet, dass** in einem vorgegebenen Bereich um eine Start- und Landebahn das Gelände entsprechend den natürlichen Höhen dargestellt wird.

4. Verfahren nach Anspruch 3, **dadurch gekennzeichnet, dass** in einem weiteren Bereich um eine Start- und Landebahn dünnere Schichten dargestellt werden.

5. Verfahren nach einem der vorhergehenden Ansprüche, **dadurch gekennzeichnet, dass** die Darstellung zumindestens der unteren Teile des Geländes in einer weniger auffälligen Farbe, insbesondere Grau, erfolgt.

6. Verfahren nach einem der vorhergehenden Ansprüche, **dadurch gekennzeichnet, dass** oberhalb einer bestimmten Höhe liegende Geländeteile mit mindestens einer auffälligen Farbe dargestellt sind.

7. Verfahren nach einem der vorhergehenden Ansprüche, **dadurch gekennzeichnet, dass** die seitlichen Begrenzungen bzw. Wände der Schichten farblich von den Oberflächen der Schichten abgehoben sind.

8. Verfahren nach einem der vorhergehenden Ansprüche, **dadurch gekennzeichnet, dass** den einzelnen Schichten verschiedene Farben bzw. Graustufen zugeordnet werden.

9. Verfahren nach einem der vorhergehenden Ansprüche, **dadurch gekennzeichnet, dass** Teile des Geländes, welche vom Flugzeug weiter entfernt sind, mit weniger auffälligen Farben, insbesondere Grau, dargestellt werden.

10. Verfahren nach einem der vorhergehenden Ansprüche, **dadurch gekennzeichnet, dass** diejenigen Teile des Geländes dargestellt werden, die innerhalb einer Sichtpyramide liegen, deren entfernte Begrenzungsebene in Abhängigkeit von der jeweiligen Flughöhe derart gesteuert wird, dass sie um eine vorgegebene Entfernung weiter vom Flugzeug entfernt ist als der Schnittpunkt der Sichtpyramide mit dem Boden.

11. Verfahren nach einem der vorhergehenden Ansprüche, **dadurch gekennzeichnet, dass** das Gelände in Form eines Rastermodells des Geländes dargestellt wird, wobei Stützpunkte jeweils auf Höhenlinien liegen, und dass die Flächen zwischen jeweils zwei angrenzenden Höhenlinien mit einer Farbe versehen sind, die sich von der Farbe der Flächen zwischen anderen Höhenlinien unterscheidet.

12. Verfahren nach einem der vorhergehenden Ansprüche, **dadurch gekennzeichnet, dass** die Darstellung zumindestens der unteren Teile des Geländes in einer weniger auffälligen Farbe, insbesondere Grau, erfolgt, dass die Darstellung in Form von Höhenlinien erfolgt, wobei die Fläche zwischen jeweils zwei benachbarten Höhenlinien mit einer Farbe, insbesondere Grau, ausgefüllt wird, die von Höhenstufe zu Höhenstufe verschieden ist, und dass der Darstellung der Höhenlinien ein Modell des Geländes überlagert wird, für das die Wirkung einer Beleuchtung berechnet wird.

13. Verfahren nach Anspruch 12, **dadurch gekennzeichnet, dass** die Beleuchtung bezogen auf den Bildschirm von oben einfällt.

14. Verfahren nach einem der Ansprüche 12 oder 13, **dadurch gekennzeichnet, dass** Teile des Geländes, die für die Flugführung relevant sind, mit einer auffälligen Farbe dargestellt werden.

15. Verfahren nach einem der Ansprüche 1 bis 10, **dadurch gekennzeichnet, dass** Luftfahrthindernisse quaderförmig dargestellt werden.

## Claims

1. Method for displaying terrain on a display apparatus in an aircraft, wherein the terrain is represented at least partially in the form of a layer model of the terrain, wherein the respectively visible surfaces of the layers are displayed located at predetermined heights, wherein the height of the terrain is in each case replaced by the predetermined height level located above it, and wherein the display is produced from a viewing direction which corresponds essentially to the direction of flight, **characterized in that** the display is in perspective form, and **in that** parts of the terrain which are located below a predetermined height are displayed schematically, and those parts of the terrain which are located above the predetermined height are displayed as a more accurate approximation.

2. Method according to Claim 1, **characterized in that** the predetermined height is at a predetermined height difference below the aircraft.

3. Method according to one of Claims 1 or 2, **characterized in that** the terrain is displayed corresponding to the natural heights in a predetermined area around a take-off and landing runway.

4. Method according to Claim 3, **characterized in that** thinner layers are displayed in a wide area around a take-off and landing runway.

5. Method according to one of the preceding claims, **characterized in that** at least the lower parts of the terrain are displayed in a less conspicuous colour, in particular grey.

6. Method according to one of the preceding claims, **characterized in that** terrain parts which are located above a specific height are displayed using at least one conspicuous colour.

7. Method according to one of the preceding claims, **characterized in that** the side boundaries or walls of the layers are emphasized by colour from the surfaces of the layers.

8. Method according to one of the preceding claims, **characterized in that** different colours or shades of grey are allocated to the individual layers.

9. Method according to one of the preceding claims, **characterized in that** parts of the terrain which are further away from the aircraft are displayed using less conspicuous colours, in particular grey.

10. Method according to one of the preceding claims, **characterized in that** those parts of the terrain which are within a viewing pyramid and whose remote boundary plane is controlled as a function of the respective flying altitude are displayed such that they are a predetermined distance further away from the aircraft than the intersection of the viewing pyramid with the ground.

11. Method according to one of the preceding claims, **characterized in that** the terrain is displayed in the form of a raster model of the terrain, wherein support points are each located on contour lines, and **in that** the areas between two respectively adjacent contour lines are provided with a colour which differs from the colour of the areas between other contour lines.

12. Method according to one of the preceding claims, **characterized in that** at least the lower parts of the terrain are displayed in a less conspicuous colour, in particular grey, **in that** the display is in the form of contour lines, wherein the area between two respectively adjacent contour lines is filled with a colour, in particular grey, which differs from one height level to another height level, and **in that** the contour lines are displayed superimposed on a model of the terrain, for which the effect of illumination is calculated.

13. Method according to Claim 12, **characterized in that** the illumination is incident from above, with respect to the screen.

14. Method according to one of Claims 12 or 13, **characterized in that** parts of the terrain which are relevant for flight control are displayed using a conspicuous colour.

15. Method according to one of Claims 1 to 10, **characterized in that** aviation obstructions are displayed in the form of cuboids.

## Revendications

1. Procédé de représentation topographique sur un dispositif d'affichage d'aéronef, le terrain étant présenté au moins en partie sous la forme d'un modèle stratifié du terrain, les surfaces visibles des strates étant représentées à des altitudes définies, l'altitude du terrain étant remplacée par le gradin d'altitude défini supérieur, la représentation s'effectuant dans une direction d'observation qui correspond essentiellement à la direction de vol,
**caractérisé en ce que**
la représentation est donnée en perspective et
**en ce que** des parties du terrain situées en dessous d'une altitude prédéterminée sont représentées schématiquement tandis que les parties du terrain situées au-dessus de l'altitude prédéterminée sont représentées à une approximation plus précise.

2. Procédé selon la revendication 1, **caractérisé en ce que** l'altitude prédéterminée est située à une différence d'altitude prédéterminée par rapport à l'aéronef.

3. Procédé selon l'une des revendications 1 ou 2, **caractérisé en ce que** le terrain est représenté en altitudes réelles dans une partie prédéterminée qui entoure une piste de décollage et d'atterrissage.

4. Procédé selon la revendication 3, **caractérisé en ce que** les strates représentées sont plus minces dans une autre partie qui entoure une piste de décollage et d'atterrissage.

5. Procédé selon l'une des revendications précédentes, **caractérisé en ce que** la représentation d'au moins les parties inférieures du terrain s'effectue en une teinte moins accusée et en particulier en gris.

6. Procédé selon l'une des revendications précédentes, **caractérisé en ce que** des parties du terrain situées au-dessus d'une altitude définie sont représentées en au moins une teinte accusée.

7. Procédé selon l'une des revendications précédentes, **caractérisé en ce que** les limites latérales ou parois des strates ont une teinte différente de celle de la surface des strates.

8. Procédé selon l'une des revendications précédentes, **caractérisé en ce que** des couleurs différentes ou des intensités de gris différentes sont associées aux différentes strates.

9. Procédé selon l'une des revendications précédentes, **caractérisé en ce que** des parties du terrain plus éloignées de l'aéronef sont représentées en des couleurs moins accusées et en particulier en gris.

10. Procédé selon l'une des revendications précédentes, **caractérisé en ce que** les parties du terrain représentées sont situées à l'intérieur d'une pyramide d'observation dont le plan frontière distant est commandé en fonction de l'altitude de vol de telle sorte qu'il soit plus éloigné de l'aéronef d'une distance prédéterminée que le point d'intersection de la pyramide d'observation avec le sol.

11. Procédé selon l'une des revendications précédentes, **caractérisé en ce que** le terrain est représenté sous la forme d'un modèle tramé du terrain dont les points d'appui sont situés sur des courbes de niveau et **en ce que** les surfaces situées entre deux courbes de niveau adjacentes sont dotées d'une teinte différente de la teinte des surfaces situées entre d'autres courbes de niveau.

12. Procédé selon l'une des revendications précédentes, **caractérisé en ce que** la représentation d'au moins des parties inférieures du terrain s'effectue en une teinte moins accusée, en particulier en gris, **en ce que** la représentation s'effectue sous la forme de courbes de niveau, la surface entre deux courbes de niveau voisines étant remplie d'une teinte, en particulier de gris, différente d'une courbe de niveau à l'autre et **en ce qu'**un modèle du terrain pour lequel l'effet d'un éclairage est calculé est superposé à la représentation des courbes de niveau.

13. Procédé selon la revendication 12, **caractérisé en ce que** l'éclairage s'effectue par au-dessus de l'écran.

14. Procédé selon l'une des revendications 12 ou 13, **caractérisé en ce que** des parties du terrain qui sont importantes pour le pilotage sont représentées en une teinte accusée.

15. Procédé selon l'une des revendications 1 à 10, **caractérisé en ce que** les obstacles au vol sont représentés sous la forme de parallélépipèdes.
